# EUROPEAN PATENT APPLICATION

(11) **EP 2 246 472 A1**
(43) Date of publication of application: **03.11.2010**
(21) Application number: 09450061.8
(22) Date of filing: 24.03.2009
(51) Int. Cl.: D21H 17/28, D21H 17/29, C08B 31/12, C08J 3/075, C08J 3/28, D21H 17/69

(54) **Process for preparing polysaccharide gel particles and pulp furnish for use in paper making**

(71) Applicant: Mondi Limited South Africa, Melrose Arch 2196 Johannesburg (ZA); Mondi Uncoated Fine & Kraft Paper GmbH, 1032 Wien (AT)
(72) Inventor: Kornherr, Andreas, 1100 Wien (AT); Eder, Florian, 1190 Wien (AT); Janse, Bernard Johannes Heinrich, Collierville 38017 Tennessee (US); Sanderson, Ronald Douglas, Stellenbosch 7600 (ZA); Terblanche, Johannes Christoffel, Bellville 7530 (ZA); Zou, Mingxuan, 230088 Heifei (CN)
(74) Representative: Cunow, Gerda

(57) **Abstract**

A process for preparing polysaccharide gel particles comprises the following steps:
- preparing a bulk gel of a highly poly-disperse polysaccharide dispersion with a particle size of up to 500 µm,
- refining the highly poly-disperse polysaccharide dispersion with a refining step especially selected from milling, high intensity mixing or sonication to create particle sizes between 1 µm and 50 µm.

Furthermore a pulp furnish for use in paper or paper board production comprising the bulk gel particles of a highly

## Description

The present invention is directed to a process for preparing polysaccharide gel particles and to a pulp furnish for the use in paper or paper board production comprising polysaccharide gel particles.

A process for preparing polysaccharide gel particles with a nearly uniform particle size has been developed. With this process a bulk gel of a highly poly-disperse polysaccharide dispersion with a nearly uniform particle size or a defined particle size distribution will be prepared, which particle size can be reduced after the production of the bulk gel by refining the product. Therefore it is possible to reduce particle sizes.

Polysaccharide particles have been widely investigated and reported in literature and in patents due to their broad range of applications in the drug delivery and papermaking industries.

The conventional water-in-oil (w/o) emulsion method is the most commonly used method for preparing spherical polysaccharide particles. Generally, a polysaccharide solution is emulsified in an oil phase, such as heptane, cyclohexane, or even vegetable oil with the assistance of a lipophilic surfactant, such as sorbitan monooleate.

The starch particles are usually cross-linked by reactions of the hydroxyl group with polyfunctional reagents or by radical polymerization of unsaturated groups created on the starch.

In US-A 2007/0122487 a water-in-oil emulsion method is used to prepare hydroxyethyl starch (HES) gel particles by radical polymerization of acryloyl groups on HES.

In CN-A 1502648 a starch solution is emulsified together with some monomers in vegetable oil and consecutively cross-linked by radical polymerization.

In US-A 6,755,915 a special water-in-oil emulsion method was investigated, where the water-in-oil emulsion was converted from an oil-in-water emulsion by temperature control, then starch particles were cross-linked and separated by conventional separation techniques.

In Journal of Colloid and Interface Science 246, 48-59 (2002) and in Journal of Material Science: Material Medicine 17, 371-377 (2006), starch particles were prepared by water-in-oil emulsification and the particles cross-linked using epichlorohydrine and trisodium trimetaphosphate (TSTP), respectively. It is easy to control the size of the particles using this method, but solvent and surfactants have to be removed from the final particles.

The solvent exchange method is also often used. In CN-A 1951979 a starch solution, e.g. in dimethyl sulfoxide (DMSO), is added dropwise to a mixture of water/ethanol/surfactant, e.g. sodium dodecyl benzene sulphate (SDBS), to form starch particles.

In the article of El-Tahlawy, K., et al. [Carbohydrate Polymers 67(3), 319-331 (2007)], starch microcellular foam particles were prepared by precipitation of a cooked starch solution cross-linked with glutaraldehyde under shear with ethanol. Effects, such as the viscosity of the starch solution, stirring speed during the precipitation and cross-linking content on the particle morphology and size were studied. The method was also applied in US-A 6,703,048.

A spray drying method by which to obtain polysaccharide particles is reported in US-A 5,391,696. It is also described in several published articles, such as Krishnan, S., et al., Carbohydrate Polymers 62(4), 309-315 (2005); Limwong, V., et al., AAPS PharmSciTech 5(2): article 30 (2004).

In US-A 6,677,386 a process for producing biopolymer nanoparticles is described, in which the biopolymer is plasticized using shear forces, an agent being added during the processing. After said processing, the biopolymer can be dispersed in an aqueous medium, in a concentration of 4-40 wt%. This results in starch nanoparticles with particle sizes less than 400 nm. This indeed would be a useful technique, especially when nanoparticles are required for layer-by-layer encapsulation, but it requires a significant amount of plasticizing.

Recrystallization of polysaccharides can also be used to prepare particles. Crystalline precipitation is observed in concentrated aqueous solutions of low molecular weight dextran. It was hypothesized that crystallization is due to association of the chains through hydrogen bonding, see, for example, Stenekes, R. J. H., Talsma, H. and Hennink, W. E., Biomaterials 22(13), 1891-1898 (2001). The same phenomenon was observed for starch [Fanta, G. F., et al., Carbohydrate Polymers 61(2), 222-230 (2005); Elfstrand, L., et al., Carbohydrate Polymers 69(4), 732-741 (2007)]. The acidification of polysaccharides tends to decrease recrystallisation and may require further cross-linking of the polysaccharide.

In WO 94/091910 and WO 03/078732 fibrous starch particles were prepared by the extrusion of a dispersion or aqueous solution of starch material into a flow of saline coagulating agent. The particles obtained generally had a size ranging between 20-200 micrometer, with thickness less than 5 micrometer.

In GB-A 2258251, starch solution/dispersion was also injected into a flux of coagulating agent. The coagulating agent is a solution of a salt, such as ammonium sulphate. The resulting starch pulp comprises starch flakes that can be mixed with cellulose fibre suitable for use in papermaking.

The application of gel particle preparation techniques, such as sonication, or use of a ball miller or micro-mixer to produce starch gel parties has not been reported in prior art.

It is also well known practice to use starch and/or modified starch, especially cationic starch, as a flocculation aid and strengthening aid in the papermaking industry. Efforts to introduce more starch purely by adding more cationic starch have been unsuccessful due to excess amount of cationic starch passing through the process into the white water instead of retaining on the sheet after the net negative charge on the fibres is neutralized. The starch in wastewater increases the burden of white water treatment. In order to introduce more starch but simultaneously increase the retained level of starch, the addition of starch particles has been investigated by many researchers.

In US-A 7,074,845, swollen cationic starch together with anionic synthetic latex was used to mix with filler slurry and the slurry was then added to the papermaking furnish. Cross-linked starch and limitedly swollen starch granules were also presented in US-A 2,113,034 and US-A 2,328,537. The use of these led to improvement of dry strength properties of paper.

WO 03/078732 reports on the production of fibrous nonionized starch particles and their use to improve the dry strength of the paper.

In WO 02/08516 cationic cross-linked starch dispersions obtained by reactive extrusion were also used in papermaking as additives.

These sources do not specify an anionic starch with preferable degrees of substitution, nor do they refer to the standards in papermaking where cationic starch gels are already introduced as part of the process for attaching to fibres prior to adding fillers to the mixture.

It is this aspect of papermaking that the present patent relies on, namely in not only binding and flocculating the filler particles, but also ensuring increased binding to the cationic starch already present in the papermaking process.

Starch or modified starch is traditionally used as flocculation aid and strengthening aid in the wet end of the papermaking process. Filler, such as precipitated calcium carbonate (PCC) is usually naturally slightly positively charged, and fibre slightly negatively charged. Sufficient flocculation can generally not be achieved with a mixture of 10 - 40 wt% natural PCC and 90-40 wt% fibre, because normally the net charge is negative. Hence a cationic polymer, particularly cationic starch, is used to achieve better flocculation.

The greater the net anionic charge the more cationic polymer can be used to acquire good flocculation. However, the net negative charge is unfortunately limited, and attempts to introduce more starch purely by adding in more cationic starch have been unsuccessful because the excess cationic starch will go into the white water instead of being retained on the sheet, after the net negative charge is neutralized. It also increases the burden of white water treatment.

Therefore the present invention aims at providing a process for preparing polysaccharide gel particles with which particles it will be possible to improve various paper properties and also to improve the filler retention within the fibre matrix in the papermaking process.

For achieving this the process according to the present invention is characterized by the following steps:
- preparing a bulk gel of a highly poly-disperse polysaccharide dispersion with a particle size of up to 500 µm,
- refining the highly poly-disperse polysaccharide dispersion with a refining step especially selected from milling, high intensity mixing or sonication to create particle sizes between 1 µm and 50 µm.

With the process according to the present invention it is possible to obtain a homogeneous bulk gel of a highly poly-disperse polysaccharide dispersion. With such a dispersion it is possible to prepare paper or paper handsheets which do not only show excellent mechanical properties, but also an improved strength of the paper.

For obtaining an especially homogeneous solution and especially paper with an enhanced tear resistance and strength the bulk gel of a highly poly-disperse polysaccharide dispersion is prepared by a ionic modified polysaccharide solution, which solution is cross-linked to a bulk gel and the bulk gel is broken up to a particle size of up to 500 µm. By using a ionic modified polysaccharide solution for preparing the highly poly-disperse polysaccharide dispersion it was surprisingly found that one can obtain an especially homogeneous dispersion and therefore a relatively narrow particle size distribution which increases the mechanical strength of the thus produced paper.

For obtaining an even better homogenization of the polysaccharide dispersion the bulk gel of a highly poly-disperse polysaccharide dispersion is broken up by a method selected from homogenization, milling, refining or sonication. By breaking up the bulk gel of the highly poly-disperse polysaccharide dispersion by methods selected from homogenization, milling, refining or sonication one can obtain a bulk gel with a uniform particle size distribution. Such a bulk gel may create particles with nearly homogeneous particle sizes in the further refining steps and paper having been produced with such a dispersion does not only show an enhanced tear strength, but also a better bending stiffness.

By preparing the bulk gel of the highly poly-disperse polysaccharide dispersion with a direct cross-linking and a ionization process it is possible to retain the granular form in the dispersion to minimize the working steps and therefore to obtain a homogeneous, good and cheap product.

According to a preferred embodiment of the present invention the bulk gel of a highly poly-disperse polysaccharide dispersion is prepared by formation of a ionized polysaccharide solution with at least one further synthetic water-soluble polymer selected from the group consisting of polyvinyl alcohol, polyacrylate or polyvinylpyrrolidone. With such a process it is possible to enhance the properties of the final particles and therefore also of the final product, namely the paper.

It was found that the modification of the polysaccharides can further ameliorate the properties of the poly-disperse polysaccharide dispersion. Therefore according to the process of the present invention the ionized polysaccharide solution is prepared by formation of an etherified starch or an esterified starch compound with the formula PS-O-R or PS-OCO-R, wherein PS represents the polysaccharide and R is selected from the group consisting of primary, secondary, tertiary and quaternary amines, imino or ammonium groups, tertiary aminoalkylethers, quaternary ammoniumethers, carboxylates, sulphates, sulphonates, nitrates or phosphate functional groups.

Accordingly the ionic modification of the polysaccharides involves formation of an etherified starch or involves formation of an estherified starch compound with the formula:

PS-O-R or PS-OCO-R

where PS represents the polysaccharide and R the ionic derivative. In this case R can contain amino, imino or ammonium groups. Preferably the derivative will include nitrogen containing groups comprising primary, secondary, tertiary and quaternary amines. Tertiary aminoalkyl ethers typically used for the etherification reaction onto starch include, but are not limited to 2-diethylaminoethyl chloride (DEC), 2-dimethylaminoethyl chloride, 2-diisopropylaminoethyl chloride, 2-diethylaminoethyl bromide and 2-dimethylaminoisopropyl chloride. Quaternary ammonium ethers generally include, but are not limited to 2,3-epoxypropyltrimethylammonium chloride or 3-chloro-2-hydropropyltrimethylammonium chloride (chlorohydrine form), 4-chloro-2-butenyltrimethylammonium chloride, chloropropyltrimethylammonium chloride and N-(3-chloro-2-hydroxypropyl)pyridium chloride.

Furthermore, if it is desired to produce a cationic polysaccharide solution, the process is performed by grafting of cationic water-soluble monomers into the polysaccharides.

Preferably the cationic water-soluble monomers are quaternary ammonium monomers and especially 2-(methacryloyloxy)ethyl trimethylammonium chloride. If during the paper production process ionic and especially cationic polysaccharide solutions are used, the properties of the final product, namely the paper, are ameliorated, especially the bending stiffness is improved.

For also ameliorating other properties of the final product of the paper in the process for producing the bulk gel of a highly poly-disperse polysaccharide dispersion an anionic polysaccharide solution is introduced, wherein anionic polysaccharides are selected from the group consisting of carboxymethyl starch, carboxyethyl starch, poly(acrylic acid)-starch graft copolymers, starch-2-hydroxypropylcitrate, starch-2-hydroxypropylphosphate and starch-2-hydroxypropylsulphate.

The preparation of an anionic polysaccharide solution is performed by etherification of carboxylic acid containing derivatives onto starch. Anionic functional groups can also be attached to the polysaccharide through the etherification of carboxylic acid containing derivates onto starch. These derivatives typically have the formula:

K-R'

where K represents any halide group and R' a functional chain containing carboxylic acid group(s). A typical example of such derivative is sodium monochloroacetate.

For obtaining the best results the process is performed to obtain a substitution degree which generally ranges from 0,02 to 1, but preferably from 0,02 to 0,4. Furthermore, the ionization is preferably base catalyzed.

The prepared ionized polysaccharides may be dissolved in water with heating. The solid content ranges from 1 - 25 wt%, preferably 15 wt%.

According to the present invention it is also possible that the preparation of an anionic polysaccharide solution is performed with carboxylic acid containing derivates having the formula K-R', wherein K is a halide group and R' is a functional chain containing carboxylic acid groups, such as for example sodium monochloroacetate. By producing an anionic polysaccharide solution or dispersion it is possible to obtain a final product which shows excellent properties, especially an highly improved breaking length, tear resistance and folding endurance number. It is therefore surprisingly found that that anionic polysaccharide gel particles added to the filler led to an improvement in the strength of the paper and paper hand sheets that already contained cationic starch particles added to the fibre in the fibre making process.

For further improving the results with the process according to the present invention, the polysaccharides are cross-linked with a cross-linking agent selected from the group consisting of epoxides such as epichlorohydrine, triphosphates, divinylsulphone, dialdehydes and polyaldehydes to the bulk gel of a highly poly-disperse polysaccharide dispersion. By using a cross-linking agent the polysaccharide particles will show a narrow particle size distribution and therefore also the final product, namely the paper produced with a bulk gel of a highly poly-disperse polysaccharide dispersion shows excellent mechanical properties, such as improved tear resistance, bending stiffness, folding endurance and so on.

In the process according to the present invention the amount of cross-linking agent used depends on the degree of cross-linking requirement and is preferably of 1 to 15 wt% based on the dry weight of the polysaccharide. In this process the cross-linking agent may be used alone or as a mixture and the reaction can be catalyzed as already mentioned.

Concerning the process for producing the highly poly-disperse polysaccharide dispersion it should be pointed out that this dispersion can be prepared using one of two methods, namely a macro gel method, wherein first a bulk gel solution of ionized polysaccharide or its derivative is prepared, followed by cross-linking and homogenization for obtaining a particle size up to 500 µm and a further refining step for obtaining the desired particle size of 1 to 15 µm. The other method is an in-situ ionizing method wherein the polysaccharide raw material should be supplied in its granular form. The granules can be cross-linked either before or after ionization, but preferably before ionization, and after the surface ionization of the particles the charged, ionized particles will be refined to the desired particle size.

Refining of the rough polysaccharide dispersion can be performed using sonication, or other suitable equipment that can provide a strong shear force. Sonication or high intensity mixing should be carried out at a temperature ranging from room temperature to 90 °C. Polysaccharides can be degraded by exposure to ultrasonification. When mixing is used it is the shear force that breaks up the gel particles. The particle size can be monitored by optical microscopy. The energy input depends on the size of the final particles desired.

The invention is also directed to a pulp furnish for use in the paper or cardboard production comprising the bulk gel particles of a highly poly-disperse polysaccharide dispersion which are prepared according to the present invention, fibres and inorganic fillers selected from the group, consisting of precipitated calcium carbonate, ground calcium carbonate, calcium sulphate, talc, calcinated clay, clay, titanium dioxide or zinc oxide. With a pulp furnish for use in paper, card or paper board production according to the present invention it is possible to produce paper or paper board with improved properties, namely with an improved bending stiffness, tear resistance, folding endurance number and breaking length.

In accordance with the present invention bulk gel particles are added to the filler slurry, whereby especially the bending stiffness, breaking length, tear resistance and folding endurance number of paper or paper board is highly improved.

The invention is further described in the following examples and figures. These figures and examples should, however, by no means limit the scope of the present invention.

In these figures
Fig. 1 shows typical optical microscope pictures of starch gel particles by macro-gel method (a) after homogenization and (b) after sonication,
Fig. 2 shows micrographs of in-situ cross-linked anionic starch particles, and
Fig. 3 shows percentage improvement in hand sheet properties achieved by addition of 2 wt% anionic modified macro-gel and in-situ cross-linked starch particles at filler levels of 20, 25 and 30 wt%.

These figures are especially further explained in the description of the following examples.

### Example 1

### Starch particles preparation by the macrogel method

### a. Anionic starch particles

Epichlorohydrine (2 g) was added to a solution of sodium carboxymethyl starch (DS = 0,10; 15 g) in water (83 g) to which NaOH (2 g) had been added. After keeping the mixture at 70 °C for 4 hours a soft bulk gel formed. The bulk gel was chopped into rough pieces after which water was added to reduce the solid content to about 5 wt%. The mixture was neutralized with HCl to pH 6 and homogenized, using a standard mechanical homogenizer, to yield a suspension with particle sizes of about 200 - 500 µm. At this point impurities such as salt produced during the cross-linking and neutralization reactions were removed by centrifugation and washing. Finally, the suspension was subjected to an ultrasonic field for several minutes. The duration depends on the amount of sample, typically the energy input is about 80 kJ/200 ml sample, and the desired particle size or particle size distribution. The suspension was sonicated until an average particle size of about 8 µm was obtained.

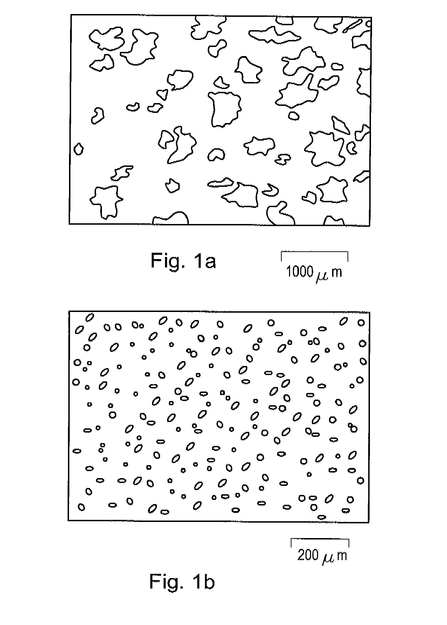

In Fig. 1 typical optical microscope images of starch gel particles prepared by the above-mentioned macrogel method are shown. Fig. 1a shows optical microscope images of starch gel particles after homogenization and Fig. 1b shows starch gel particles after sonication.

### b. Cationic starch particles

Cationic modified maize starch (DS = 0,05) is prepared by loading maize starch (20 g) and acetone (25 ml) to a reactor vessel. The starch is slurried in the acetone after which a premix of deionized water (100 g) and NaOH (1,65 g) is added. The reaction mixture is heated to 55 °C under continuous stirring after which 3-chloro-2-hydroxypropyltrimethylammonium chloride solution (60 wt%, 1,93 g) is added dropwise over a period of 30 minutes. After 6 hours the reaction mixture is removed and neutralized with 32 % HCl.

The modified starch gel is repeatedly precipitated in acetone and subsequently redispersed in deionized water in order to remove excess reagents and by-products. The purified cationic starch gel is dried and a similar procedure to that described in (a) is used, but carboxymethyl starch is replaced with the cationic starch to prepare cross-linked cationic starch particles.

### Example 2

### Starch particles prepared by the in-situ/ionization method

### a. Anionic starch particles

Maize starch granules (25 g) were dispersed in mixture of acetone/water (113 ml/11 ml), followed by the addition of epichlorohydrine (1,5 g, 6 wt% based on starch content) and NaOH (1,3 g)) under constant stirring. The temperature was kept at 55 °C for 1 h to cross-link the granules. NaOH (10,3 g) and sodium monochloroacetate (3,6 g, DS = 0,2) were added separately. The mixture was stirred for 2 hours, and then the reaction was stopped by the addition of HCl (32 %, 29,9 g). Finally, the starch granules were filtered off and washed with water until no chloride ions were present. A dispersion of starch granules with a solid content of 5 wt% was obtained by diluting the filtered starch granules with water.

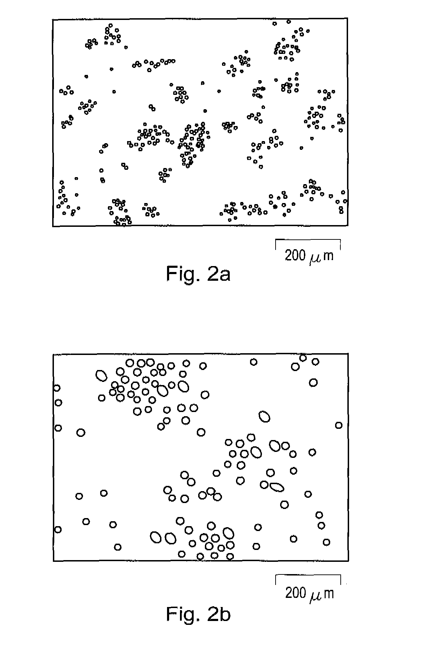

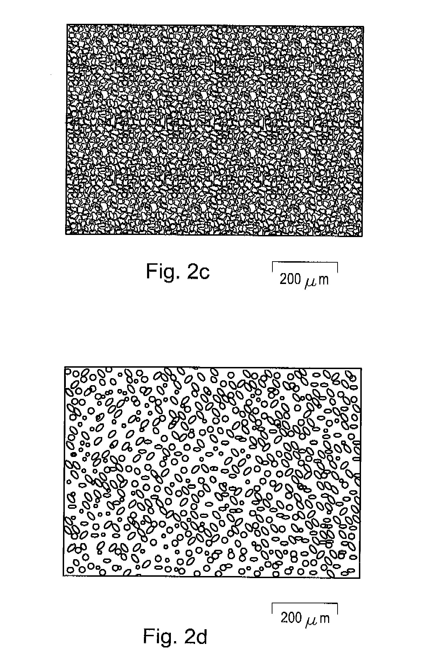

In Fig. 2 micrographs of in-situ cross-linked anionic starch particles are shown. Therein Fig. 2a shows maize starch as a starting material, Fig. 2b shows maize starch after swelling and cross-linking according the process of example 2a, Fig. 2c shows the cross-linked maize starch after anionization and finally Fig. 2d shows the anionic cross-linked maize starch after sonication.

Sonication was used to break down the granules further. The final particle size can be roughly controlled by the input energy, which is determined by the sonication amplitude and time. Typically 200 g 5 wt% cross-linked starch granule dispersion subjected to the ultrasonic field for 14 min (around 12 to 14 kJ) at 90 % amplitude can result in particles with sizes between 10 - 20 µm. A product with a particle size of 10 - 20 µm is shown in Fig. 2d.

### b. Cationic starch particles

Cross-linked cationic starch dispersions were obtained by a similar process to that described in (a), except that the starch granules were treated with the following: NaOH (4,3 g) and 3-chloro-2-hydroxypropyltrimethylammonium chloride solution (60 wt%, 19,3 g), added dropwise over 30 min. The reaction was then continued for 6 h. Finally, 32 % HCl was used to neutralize the excess NaOH.

### Example 3

### Application of the starch gel particles prepared by the macrogel and in-situ/ionizing methods

Hand sheet preparation involves the standard steps of fibre milling, disintegration, equalizing, and sheet forming. The starch gel particles prepared in example 1 or 2 were used as additives in the stock. Normally, anionic starch particles (2 wt% based on dry precipitated calcium carbonate (PCC)) are mixed with PCC, the cationic starch particles (2 wt% based on dry fibre) are mixed with fibre, after which the two mixtures are mixed again and a cationic starch solution (0,8 wt% based on the total mass of the dry hand sheet) was used to flocculate the PCC and fibres. After conditioning properties such as breaking length, bending stiffness, tear resistance, folding endurance number and opacity were measured according to the corresponding standards.

In the following table 1 it is shown that when a combination of anionic and cationic starch is used, the breaking length, tear resistance, folding endurance number and bending stiffness all considerably improved at the different PCC filler contents that were investigated.

**Table 1. Properties of hand sheets containing both anionic and cationic starch particles, prepared by the macrogel method**

| Additives | Filler content [%] | Breaking length [m] | Bending stiffness [mN] | Tear resistance [mN] | Folding endurance number | Opacity |
|---|---|---|---|---|---|---|
| NO | 19.7 | 3694 | 116.0 | 402 | 17 | 87.36 |
| NO | 24.3 | 3069 | 98.0 | 324 | 7 | 88.65 |
| NO | 30.4 | 2524 | 76.0 | 263 | 4.5 | 89.16 |
| 2% A₁₂₋₀._{10*} + 2% C_{12-0.02*} | 18.0 | 5200 | 118.0 | 516 | 47 | 85.77 |
| 2% A₁₂₋₀.₁₀ + 2% C₁₂₋₀.₀₂ | 22.8 | 4557 | 115.0 | 553 | 27 | 87.35 |
| 2% A_{12-0.10} + 2% C₁₂₋₀.₀₂ | 28.1 | 3450 | 99.0 | 381 | 16.5 | 88.85 |

| | | | | | | |
|---|---|---|---|---|---|---|
| *X_{a-b}: X represents the charge type of the starch - it can either be A (anionic) or C (cationic) a: a% ECH based on dry starch weight (used as cross-linking agent) b: substitution degree of carboxymethyl group (for anionic) or 2-hydroxypropyl trimethyl ammonium chloride (for cationic) | | | | | | |

It can therefore be concluded that anionic polysaccharide gel particles added to the filler led to an improvement in the strength of the paper and paper hand sheets that already contained cationic starch particles added to the fibre in the fibre making process.

In the papermaking process degrees of acid substitution and percentages added need to be adjusted in order to obtain a slightly negative charge in the papermaking process. Monitoring of surface can be carried out by streaming potential measurements.

**Table 2. Properties of hand sheets containing anionic starch particles prepared by in-situ /ionizing method**

| Additives | Filler content [%] | Breaking length [m] | Bending stiffness (mN) | Tear resistance (mN) | Folding endurance number | Opacity |
|---|---|---|---|---|---|---|
| NO | 19.6 | 3932 | 98.4 | 446 | 26 | 88.41 |
| NO | 24.7 | 3346 | 81.2 | 409 | 16 | 89.81 |
| NO | 30.2 | 2835 | 73.3 | 328 | 11 | 90.98 |
| 2% A_{3-0.02} | 19.8 | 4834 | 94.0 | 582 | 162 | 88.10 |
| 2% A_{3-0.2} | 24.0 | 4212 | 84.2 | 468 | 65 | 89.34 |
| 2% A_{3-0.2} | 30.6 | 3241 | 78.4 | 413 | 27 | 90.50 |
| 2% A_{3-0.5} | 18.2 | 4857 | 95.0 | 507 | 180 | 87.04 |
| 2% A_{3-0.5} | 23.5 | 3917 | 89.0 | 449 | 57 | 89.12 |
| 2% A_{3-0.5} | 28.7 | 3358 | 84.0 | 464 | 27 | 90.38 |

| | | | | | | |
|---|---|---|---|---|---|---|
| *A_{3-0.2} and A_{3-0.5} are samples prepared by in-situ/ionizing method. | | | | | | |

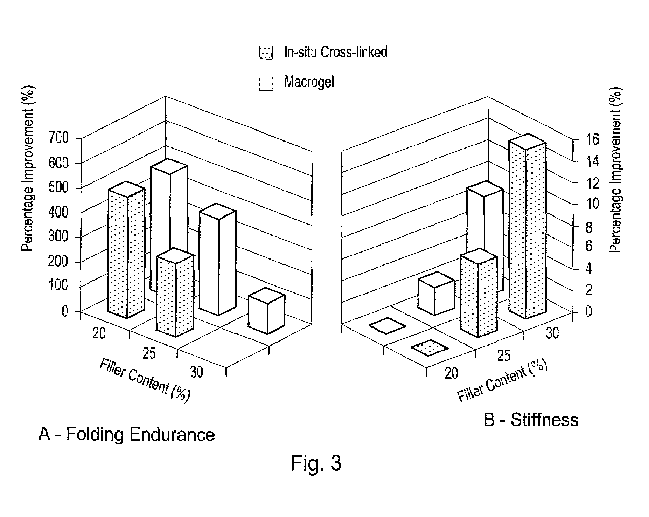

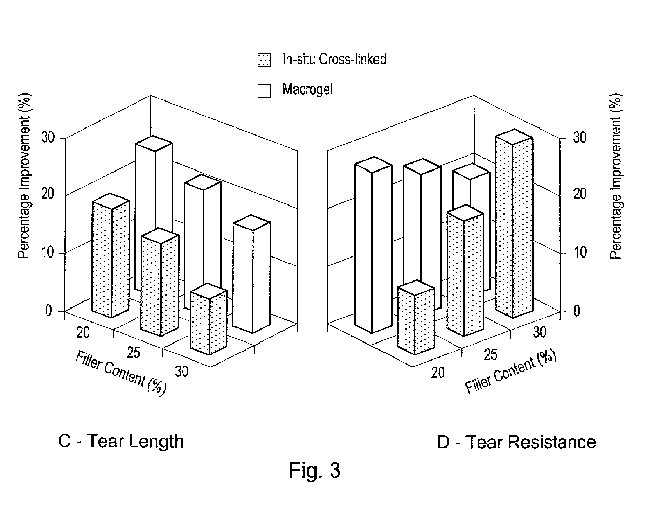

In Fig. 3 a graph is presented showing the percentage improvement in bending endurance, bending stiffness, tear length and tear resistance of hand sheets that were treated with:
1. in-situ cross-linked anionic starch particles with an anionic substitution degree of 0,5 and cross-linked with 3 wt% epichlorohydrine. Addition of 2 wt% of a 4 wt% starch particle solution was made to the PCC prior to hand sheet formation,
2. macrogel starch particles with an anionic substitution degree of 0,2 and cross-linked with 3 wt% epichlorohydrine. Addition of 2 wt% of a 5 wt% starch particle solution was made to the PCC prior to hand sheet formation.

The additions were made at three different filler content levels: 20, 25 and 30 wt%, and bending endurance, bending stiffness, tear length and tear resistance were compared to hand sheets prepared without any anionic starch particles. Improved bending stiffness, tear resistance and tear length was reported.

From Fig. 3 one can gather that the use of in-situ cross-linked starch particles provide especially advantages in improving bending stiffness and tear resistance at higher filler addition or levels. The use of starch particles produced with a "macrogel method" shows an improved folding endurance at lower filler contents, an improved tear length at all filler content amounts and an improvement in tear resistance at lower filler addition levels.

In summary paper which is produced with the process according to the present invention shows an improvement in all relevant properties, namely bending stiffness, folding endurance, tear resistance, tear length and breaking length.

## Claims

1. A process for preparing polysaccharide gel particles comprising the following steps:
- preparing a bulk gel of a highly poly-disperse polysaccharide dispersion with a particle size of up to 500 µm,
- refining the highly poly-disperse polysaccharide dispersion with a refining step especially selected from milling, high intensity mixing or sonication to create particle sizes between 1 µm and 50 µm.

2. The process according to claim 1, wherein the bulk gel of a highly poly-disperse polysaccharide dispersion is prepared by a ionic modified polysaccharide solution, which solution is cross-linked to a bulk gel and the bulk gel is broken up to a particle size of up to 500 µm.

3. The process according to claim 2, wherein the bulk gel of a highly poly-disperse polysaccharide dispersion is broken up by a method selected from homogenization, milling, refining or sonication.

4. The process according to claim 1, wherein the bulk gel of a highly poly-disperse polysaccharide dispersion is prepared by a direct cross-linking and a ionization process.

5. The process according to any of claims 1 to 4, wherein the bulk gel of a highly poly-disperse polysaccharide dispersion is prepared by formation of a ionized polysaccharide solution with at least one further synthetic water-soluble polymer selected from the group consisting of polyvinyl alcohol, polyacrylate or polyvinylpyrrolidone.

6. The process according to any of claims 1 to 5, wherein the ionized polysaccharide solution is prepared by formation of an etherified starch or an esterified starch compound with the formula PS-O-R or PS-OCO-R, wherein PS represents the polysaccharide and R is selected from the group consisting of primary, secondary, tertiary and quaternary amines, imino or ammonium groups, tertiary aminoalkylethers, quaternary ammoniumethers, carboxylates, sulphates, sulphonates, nitrates or phosphate functional groups.

7. The process according to any of claims 1 to 6, wherein the preparation of a cationic polysaccharide solution is performed by grafting of cationic water-soluble monomers into the polysaccharides.

8. The process according to claim 7, wherein the cationic water-soluble monomers are quaternary ammonium monomers and especially 2-(methacryloyloxy)ethyl trimethylammonium chloride.

9. The process according to any of claims 1 to 6, wherein anionic polysaccharides are selected from the group consisting of carboxymethyl starch, carboxyethyl starch, poly(acrylic acid)-starch graft copolymers, starch-2-hydroxypropylcitrate, starch-2-hydroxypropylphosphate and starch-2-hydroxypropylsulphate.

10. The process according to any of claims 1 to 6, wherein the preparation of an anionic polysaccharide solution is performed by etherification of carboxylic acid containing derivatives onto starch.

11. The process according to claim 10, wherein the preparation of an anionic polysaccharide solution is performed with carboxylic acid containing derivates having the formula K-R', wherein K is a halide group and R' is a functional chain containing carboxylic acid groups, such as for example sodium monochloroacetate.

12. The process according to any of claims 1 to 11, wherein the polysaccharides are cross-linked with a cross-linking agent selected from the group consisting of epoxides such as epichlorohydrine, triphosphates, divinylsulphone, dialdehydes and polyaldehydes to the bulk gel of a highly poly-disperse polysaccharide dispersion.

13. A pulp furnish for use in paper or paper board production comprising the bulk gel particles of a highly poly-disperse polysaccharide dispersion prepared according to any of the claims 1 to 12, fibres and inorganic fillers selected from the group, consisting of precipitated calcium carbonate, ground calcium carbonate, calcium sulphate, talcum, calcinated clay, clay, titanium dioxide or zinc oxide.

14. The pulp furnish according to claim 13, wherein bulk gel particles of an anionic polysaccharide gel are added to the filler slurry.

15. The pulp furnish according to claim 13, wherein bulk gel particles of an cationic polysaccharide gel are added to the fibre pulp before final mixing.
